# EUROPÄISCHE PATENTSCHRIFT

(11) **EP 0 651 854 B1**
(45) Veröffentlichungstag und Bekanntmachung des Hinweises auf die Patenterteilung: **20.03.1996**
(21) Anmeldenummer: 93914662.7
(22) Anmeldetag: 16.06.1993
(51) Int. Cl.: F01K 23/06, F02C 3/20

(54) **VERFAHREN ZUM BETREIBEN EINES KOMBIKRAFTWERKES**
PROCESS FOR OPERATING A COMBINED POWER STATION
PROCEDE D'EXPLOITATION D'UNE CENTRALE ELECTRIQUE HYBRIDE

(30) Priorität: 24.07.1992 DE 4224959; 26.10.1992 DE 4236512
(43) Veröffentlichungstag der Anmeldung: 10.05.1995
(73) Patentinhaber: VEAG Vereinigte Energiewerke AG, D-12681 Berlin (DE)
(72) Erfinder: BAUER, Franz, D-4320 Hattingen (DE); WETZEL, Horst, D-7560 Guben (DE)
(74) Vertreter: Zinken-Sommer, Rainer
(86) Internationale Anmeldenummer: EP9301522
(87) Internationale Veröffentlichungsnummer: WO9402711

(56) Entgegenhaltungen:
- EP-A- 0 340 351
- CH-A- 246 788
- DE-A- 3 612 888
- US-A- 5 050 374

## Beschreibung

Die Erfindung betrifft ein Verfahren zum Betreiben eines Kombikraftwerkes mit einer zirkulierenden Wirbelschichtfeuerung für feste Brennstoffe, insbesondere Braunkohle entsprechend dem Oberbegriff des Patentanspruchs, wie es aus DE-A-36 12 888 bekannt ist.
Dabei sind als zirkulierende Wirbelschichtfeuerungen solche zu verstehen, die eine innere Rezirkulation, eine innere Kesselzirkulation oder eine äußere Zirkulation aufweisen.

Zur Erzielung hoher Eintrittstemperaturen für das der Gasturbine zugeführte Heißgas wird dieses mit einem aus der Wirbelschichtfeuerung abgezweigten und gereinigten Rauchgas teilstrom in einer Zusatzfeuerung direkt nacherhitzt (DE-OS 36 13 300).
Diese Verfahrensweise hat zwar den Vorteil, daß mit nur einem Brennstoff der Betrieb der Wirbelschichtfeuerung und der Zusatzfeuerung gewährleistet ist.
Von Nachteil ist, daß bei einer zirkulierenden Wirbelschichtfeuerung ein hoher anlagen- und betriebsführungstechnischer Aufwand erforderlich ist, weil die Gewinnung des Brenngases für die Nacherhitzung im Brennstoff-Asche-Kanal und im Bereich der Brennstoffzufuhr erfolgt. Eine Steuerung der erforderlichen Verbrennungsluft ist nicht ohne weiteres möglich, so daß nur eine ungenügende Ausnutzung des Brenngases aus dem Rauchgasteilstrom erreichbar ist.
Darüber hinaus ist die Enthalpie des Rauchgases der Wirbelschichtfeuerung nur ungenügend genutzt.

Weiterhin ist bekannt, diesen Rauchgasteilstrom in einem unterstöchiometrisch gefahrenen Bereich der Wirbelschichtfeuerung vor der Sekundär-Luftzuführung zu entnehmen (EP 03 40 351). Zur Verbrennung in der Nachverbrennungseinrichtung wird die dazu erforderliche Reinluft über die Luftzuführungen, die Wirbelschichtfeuerung und die Reinigungs- sowie Trenneinrichtungen geführt. Dadurch werden diese Einrichtungen durch erhebliche Volumenströme belastet und die Reinluft mit Feinstpartikelteilchen angereichert, so daß die angestrebten Vorteile überhaupt nicht erreichbar sind.

Für ein Kombikraftwerk mit einem aufgeladenen kohlebefeuerten Dampferzeuger ist es bekannt, den Dampferzeuger mit einer unterstöchiometrisch betriebenen Wirbelschichtfeuerung mit nachgeschaltetem integrierten Staubabscheider und einem mit Brennern versehenen Schmelzkammer-Kessel zu versehen (DE-OS 36 44 030).
Dieser Dampferzeuger weist den Mangel auf, daß das nur grob gereinigte Rauchgas mit allen Schadstoffen (z. B. Alkalien) in der Schmelzkammer zwar von der Asche befreit wird, aber im vollem Umfang die Schadstoffe flüchtig werden. Diese Schadstoffe führen zu Schäden an der Gasturbine. Darüber hinaus wird auch hier der gesamte Volumenstrom von Rauchgas und Reingas durch alle Einrichtungen geführt.

Für einen kombinierten Gas-/Dampfturbinen-Prozeß ist es bekannt, 80 % der Brennstoffe durch eine Teilvergasung in einem Vergaser zu behandeln und 20 % der Brennstoffe als Vergasungsrückstände in einem Kessel mit Wirbelschichtfeuerung zu verbrennen (DE-OS 36 12 888). Diese Technologie erfordert nicht nur eine aufwendige Anlagentechnik und Technologie sondern führt darüber hinaus auch noch zur Verschmutzung des Turbinenabgases durch Verbrennung der Verbrennungsrückstände und erfordert damit noch eine besondere, dem Kessel nachgeschaltete Rauchgasreinigung.

Der Erfindung liegt die Aufgabe zugrunde, mit einer einfachen Anlagentechnik und Technologie das Brenngas mit hochkalorischen Werten zu gewinnen und zu nutzen, d. h. eine optimale Nachverbrennung des Rauchgases für einemaximale Eintrittstemperatur in die Gasturbine zu erreichen.

Dies wird durch die im Patentanspruch beschriebenen Verfahrensschritte erreicht.

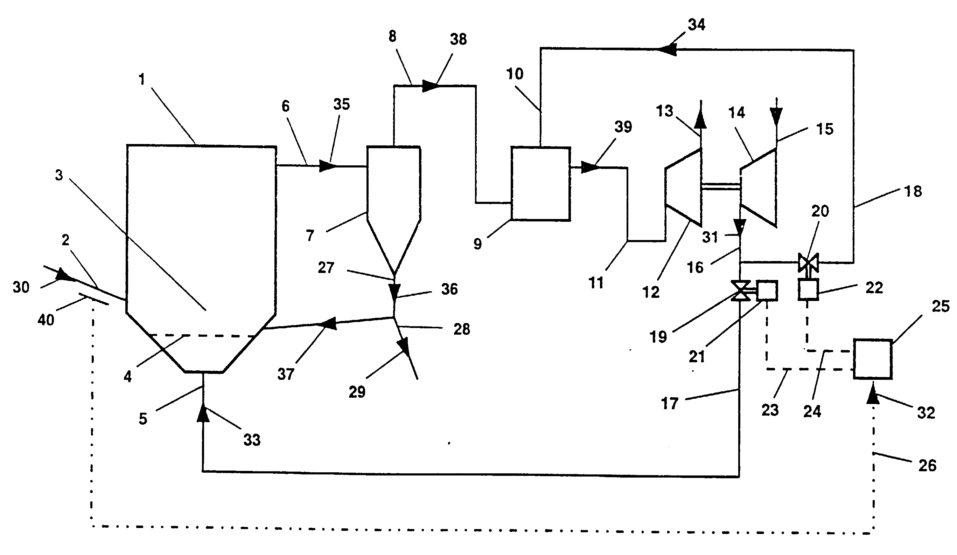

An einem Ausführungsbeispiel wird die Erfindung näher erläutert. Die Zeichnung zeigt das Prinzipbild eines Kombikraftwerkes mit dem die Wirbelschichtfeuerung aufweisenden Dampfkessel und der Gasturbinenanlage.

Der Dampfkessel 1 weist die Brennstoffzufuhr 2, die zirkulierende Wirbelschichtfeuerung 3, den Anströmboden 4 und die Verbrennungsluftzuführung 5 auf. Der Dampfkessel 1 weist den Rauchgaskanal 6 auf, der in den Zyklon 7 eingebunden ist. Der Tauchrohrkanal 8 ist in die Nachverbrennungs-Einrichtung 9 eingebunden, die die Reinluftzuführung 10 aufweist. Die Nachverbrennungs-Einrichtung 9 ist über den Heißgaskanal 11 mit der Gasturbine 12 verbunden, die den Abgaskanal 13 aufweist. Der Verdichter 14 weist den Frischluftkanal 15 und den Austritt 16 auf. Der Austritt 16 ist über den Verbrennungsluftkanal 17 mit der Verbrennungsluftzuführung 5 und über den Reinluftkanal 18 mit der Reinluftzuführung 10 verbunden. Die Luftkanäle 17; 18 sind mit den Stelleinrichtungen 19; 20 versehen, die die Antriebe 21; 22 aufweisen. Die Antriebe 21; 22 sind über die Leitungen 23; 24 mit der Steuereinrichtung 25 verbunverbunden, die über die Befehlsleitung 26 mit der Brennstoffqualitäts-Meßeinrichtung 40 verbunden ist.
Der Aschekanal 27 der Rauchgasreinigungs-Einrichtung 7 ist in die Wirbelschichtfeuerung 3 eingebunden und weist den Ascheabzug 28 auf.

Die Wirkungsweise ist folgende:

Über die Brennstoffzufuhr 2 wird der zirkulierenden Wirbelschichtfeuerung 3 der Brennstoff 30, z. B. Braunkohle, zugeführt.
In Abhängigkeit von der Brennstoffqualität (Heizwert, Feuchtegehalt) wird der Luftstrom 31 zwischen Kessel 1 und Nachverbrennungs-Einrichtung 9 mit Hilfe der Stelleinrichtungen 19; 20 aufgeteilt. Durch Aufschalten des Brennstoffqualitätssignals 32 auf die Steuereinrichtung 25 wird der Reinluftstrom 31 im Mengenverhältnis 1 : 1 aufgeteilt, so daß der entsprechende Mengenanteil des Verbrennungsluft-Teilstroms 33 zum Kessel 1 und der des Reinluft-Teilstroms 34 zur Nachverbrennungs-Einrichtung 7 geführt wird. Dadurch wird im Kessel 1 das CO-reiche Rauchgas 35 erzeugt, indem die Wirbelschichtfeuerung 3 mit einem Luftverhältnis von λ = 0,5 in einem vergaserähnlichen Betrieb gefahren wird.
Das Rauchgas 35 wird in den Zyklon 7 geleitet. Hier wird die trockene Asche 36 mit den nicht ausgetriebenen Schadstoffen abgeschieden.
Zur Wahrung des Mengengleichgewichts wird der Asche-Teilstrom 37 in die Wirbelschichtfeuerung 3 ein- und der Asche-Teilstrom 29 über den Ascheabzug 28 ausgetragen. Über den Tauchrohrkanal 8 wird das gereinigte Rauchgas 38 der Nachverbrennungs-Einrichtung 9 zugeführt.
In der Nachverbrennungs-Einrichtung 9 wird das gereinigte CO-reiche Rauchgas 38 mit Hilfe des Reinluft-Teilstromes 34 nachverbrannt und damit das Heißgas 39 erzeugt.
Das Heißgas 39 wird der Gasturbine 12 zugeleitet. Das Abgas 40 wird über den Abgaskanal 13, z. B. einem Abhitzekessel zugeführt. Die Gasturbine 12 treibt einen Generator und den Verdichter 14, so daß über den Frischluftkanal 15 die notwendige Luft 31 am Austritt 16 bereitgestellt wird.

Durch den unterstöchiometrischen Betrieb wird eine wesentliche Durchsatzsteigerung an Brennstoff erzielt, so daß eine höhere Leistung des Kessels erzielt wird.
Gleichzeitig wird mit der Aufteilung des Verbrennungsprozesses ein höheres Temperaturniveau des Heißgases erreicht und über den damit verbundenen höheren Wirkungsgrad der Gasturbine eine Leistungssteigerung der Gesamtanlage ermöglicht.
Außerdem wird durch den höheren Wirkungsgrad weniger CO₂ imitiert und so eine geringere Umweltbelastung erreicht.

Die Vorzüge der Erfindung treten auch bei einer zirkulierenden Wirbelschichtfeuerung mit Primär-, Sekundär- und Tertiärluftzuführung ein, wenn ein Brenngasteilkanal über Entnahmestellen in den unterstöchiometrisch gefahrenen Bereich der Wirbelschichtfeuerung vor Sekundärluftzuführung eingebunden ist. Der Brenngasteilkanal ist über eine Brenngasreinigung in die mit der Reingaszuführung versehene Nachverbrennungseinrichtung versehen.
Durch das so gewonnene hochkalorische und staubarme Brenngas wird in der Nachverbrennungseinrichtung das Rauchgas der Wirbelschichtfeuerung ein Heißgas mit Temperaturen über 1 100 °C erzeugt.

Durch die Erfindung werden folgende Vorteile erreicht:
1. Erhöhung des Wirkungsgrades durch die erreichbaren Eintrittstemperaturen für die Gasturbine und Minderung der CO-Belastung.
2. Verringerung der CO₂-Emission
3. Intensive Nutzung der Rauchgas-Enthalpie in der Gasturbine
4. Es wird nur ein Brennstoff für die Wirbelschichtfeuerung und für die Nachverbrennungseinrichtung durch Nutzung der CO-haltigen Gasatmosphäre von Sekundärluftzuführung benötigt.
5. Schutz der Gasturbine vor Verschmutzungen durch Brennstoff- und Ascheteilchen.
6. Die Aufteilung der Rauchgasströme läßt kleinere Anlagenkomponenten zu.
7. Sehr gute verbrennungs- und regelungstechnische Beherrschung des Gesamtprozesses.

### Aufstellung der verwendeten Bezugszeichen

1 Dampfkessel
2 Brennstoffzufuhr
3 Wirbelschichtfeuerung
4 Anströmboden
5 Verbrennungsluftzuführung
6 Rauchgaskanal
7 Zyklon
8 Tauchrohrkanal
9 Nachverbrennungs-Einrichtung
10 Reinluftzuführung
11 Heißgaskanal
12 Gasturbine
13 Abgaskanal
14 Verdichter
15 Frischluftkanal
16 Austritt
17 Verbrennungsluftkanal
18 Reinluftkanal
19 Stelleinrichtung
20 Stelleinrichtung
21 Antrieb
22 Antrieb
23 Leitung
24 Leitung
25 Steuereinrichtung
26 Befehlsleitung
27 Aschekanal
28 Ascheabzug
29 Asche-Teilstrom
30 Brennstoff
31 Luftstrom
32 Brennstoffqualitätssignal
33 Verbrennungsluft-Teilstrom
34 Reinluft-Teilstrom
35 Rauchgas
36 trockene Asche
37 Asche-Teilstrom
38 gereinigtes Rauchgas
39 Heißgas
40 Meßeinrichtung

## Patentansprüche

1. Verfahren zum Betreiben eines Kombikraftwerkes mit einem eine zirkulierenden Wirbelschichtfeuerung aufweisenden unterstöchiometrisch gefahrenen Kessel für feste Brennstoffe, insbesondere Braunkohle, wobei Rauchgas aus der mit einer Primärverbrennungsluftzuführung und mit oder ohne Sekundär- und Tertiärverbrennungsluftzuführungen versehenen zirkulierenden Wirbelschichtfeuerung gereinigt und direkt nacherhitzt und als Heißgas der Gasturbine zugeführt wird und daß der gesamte Kessel in einen vergaserähnlichen Betrieb gefahren und dem Rauchgas nach der Reinigung Reinluft zur Nachverbrennung zugeführt wird,
**gekennzeichnet dadurch**,
daß die Luft im Verhältnis 1 : 1 bis 2 : 1 zwischen Kessel und Nachverbrennungs-Einrichtung aufgeteilt und so ein Luftverhältnis im Kessel von λ = 0,5 bis 0,7 gefahren und das Mengenverhältnis Verbrennungsluft/Reinluft in Abhängigkeit von der Brennstoffqualität gesteuert wird.

## Claims

1. Method for operating a combined power station with a boiler for solid fuels, in particular, lignite coal, said boiler being operated at an understoichiometrical state and comprising a circulating fluidized-bed firing equipped with a primary combustion air supply duct and, optionally, a secondary or tertiary combustion air supply duct, and where flue gas is purified and immediately reheated using this circulating fluidized bed and is subsequently fed to the gas turbine in the form of hot gas, said boiler being operated similar to a carburettor, with filtered air being added to the flue gas after its purification for afterburning,
**characterized in that**
the air is distributed to the boiler and the afterburning assembly at a proportion of 1 : 1 to 2 : 1, thus yielding an operating air ratio in the boiler of λ = 0.5 to 0.7 whereas the proportion of combustion air/filtered air is controlled depending on fuel quality.

## Revendications

1. Procédé de chauffe par combustibles multiples de centrale thermique avec une chaudière à fonctionnement sous-stoechiométrique à chauffage à turbulence par circulation pour combustibles solides, en particulier le lignite, dans lequel le gaz de fumée est purifié par le chauffage à turbulence par circulation par une alimentation en air de combustion primaire et ou une alimentation en air de combustion secondaire et tertiaire, directement réchauffé et dirigé comme gaz de chauffage vers la turbine à gaz et dans lequel toute la chaudière fonctionne dans des conditions semblables à un carburateur et de l'air pur est injecté au gaz de fumée après purification , caractérisé en ce que
l'air est réparti dans la proportion de 1:1 à 1:2 entre la chaudière et l'installation de combustion retardée et le taux d'air dans la chaudière est de λ = 0,5 à 0,7 et le rapport quantitatif entre l'air de combustion et l'air pur est piloté en fonction de la qualité du combustible.
